# EUROPEAN PATENT SPECIFICATION

(11) **EP 2 768 310 B1**
(45) Date of publication and mention of the grant of the patent: **20.09.2017**
(21) Application number: 12841046.1
(22) Date of filing: 23.10.2012
(51) Int. Cl.: A23L 5/10, A23L 17/40, A22C 29/04, A23B 4/03, A23B 4/06, B65D 81/34, B30B 5/00

(54) **SHELLFISH PREPARATION PROCESS**
ZUBEREITUNGSVERFAHREN FÜR SCHALENTIERE
PROCÉDÉ DE PRÉPARATION DE COQUILLAGES

(30) Priority: 20.10.2011 NZ 59589411
(43) Date of publication of application: 27.08.2014
(73) Proprietor: Westhaven Marketing Ltd, Nelson 7073 (NZ)
(72) Inventor: MCDONALD, Alister John, Collingwood Golden Bay Nelson 7073 (NZ)
(74) Representative: Eisenführ Speiser
(86) International application number: PCT/NZ2012/000193
(87) International publication number: WO 2013/058667

(56) References cited:
- EP-A1- 0 720 954
- EP-A1- 0 720 954
- EP-A1- 1 524 200
- DD-A1- 273 433
- JP-A- S6 049 772
- US-A- 4 298 119
- US-A- 4 494 364

## Description

### Field of the Invention

This invention relates to a method for preparing shellfish. More particularly, the invention relates to a method of preparing bivalve shellfish for cooking intended to retain the meat and juice of the shellfish by enclosing and compressing the shellfish within a fluid-permeable bag.

### Background

Live bivalve shellfish, when heated, open their shells and expose the meat and juices inside. The degree to which the shell opens may vary from one shellfish to another, and this may lead to variations in the length of time required to cook each shellfish. This may result in an inconsistent product. The inconsistent opening of the shells may also result in a less desirable appearance of the product, in particular when sold in a pre-packaged frozen state. Retention of fluids inside the shell during cooking may also be desirable for purposes of improved flavour and/or moisture.

Several prior art shellfish processing techniques may help in keeping the shellfish closed during processing.

United States Patent No. 6,010,397 discloses a container in which shellfish are placed and vibrated to compact them together. The shellfish are retained in the packed configuration in the container using a lid, and the shellfish are subsequently cooked in boiling seawater. The rigid basket and lid would require a specific number or volume of shellfish to be placed within in order to keep the shellfish tightly packed. Furthermore, the use of a vibration apparatus, such as a vibrating bed, may increase the complexity and noise of the process.

European Patent Application No. 0 398 667 discloses a wire basket in which mussels are steamed. A weighted plate is placed on top of the mussels. The weight of the plate could make the placing and removal of the plate and moving of the basket awkward and/or dangerous. Furthermore, due to the shellfish being compressed from only one direction, in combination with variations in the size and/or alignment of the shellfish, there is a risk that a number of shellfish may still open at least partially during cooking.

New Zealand Patent Application 286,133 discloses a method of processing shellfish including vacuum sealing the shellfish in a bag before cooking and then freezing the sealed bag of shellfish. Before vacuum sealing, the shellfish must be dried, covered in oil, and dried again to remove moisture which can cause cracking and deterioration in the appearance of the shellfish during freezing. The vacuum within the bag constricts the shellfish to prevent opening during cooking. However, creating the vacuum requires an airtight seal and a vacuum pump, introducing complexity and cost to the process. Furthermore, the vacuum bag prevents the cooking liquid or steam from directly contacting the shellfish during cooking, potentially leading to inconsistent cooking thereof. That is, shellfish towards the outside of the vacuum bag cook faster than those towards the centre of the bag.

JP60049772 shows a system for cooking shellfish wherein the shellfish are placed in a net. The net is then placed in a plastic bag, or vessel, and sealed. The bag or vessel may then be cooked while holding the shellfish under pressure.

EP0720954 shows a shellfish packaging means wherein an inflated or inflatable balloon is used to maintain pressure on the shellfish after they have been inserted into a knotted bag. The demonstrated example uses a knotted net to hold the shellfish before the pressure is applied by the balloon.

DD273433 shows composting device with a means for twisting a bag held at first and second ends. US4494364 shows a means for processing chicken wherein the chicken is placed in an apparatus and twisted so as to wrap the chicken.

### Object of the Invention

Accordingly, it is an object of the present invention to provide a method of preparation which overcomes or at least ameliorates one of more of the disadvantages of the prior art, or to at least provide the public with a useful choice.

Further objects of the invention will become apparent from the following description.

### Summary of Invention

The invention is directed to a method according to claim 1. Accordingly, the invention may broadly be said to consist in a method for processing shellfish comprising:
providing a substantially flexible liquid-permeable container having at least one open end;
providing a plurality of shellfish in the container;
closing the or each open end of the container;
tensioning the container by twisting the container to compact the shellfish and prevent the shellfish from opening; securing the twisted end of the container to maintain said tension in the container; and
cooking the shellfish by steaming or boiling the shellfish in the container, wherein the container prevents the shellfish from opening during cooking and allows the cooking liquid and/or gases to the shellfish.
As described above, the shellfish are compacted to an extent which prevents the shellfish opening. Preferably the step of twisting the container further comprises the step of inserting a substantially rigid elongate object through substantially opposing sides of the container at or adjacent an end of the container, in order to provide leverage to assist in the twisting.

Alternatively the step of tensioning the container comprises inserting a first end of the container in or through an aperture, and pulling said first end so as to compact the shellfish towards an opposing second end of the container.

Alternatively, the step of tensioning the container comprises displacing opposing ends of the container to stretch the container.

Alternatively, the step of tensioning the container comprises dividing the plurality of shellfish between two halves of the container, and twisting each half of the container in opposing directions.

Preferably the shellfish are divided in the two halves during the twisting step using a divider placed about a central portion of the container.

Preferably the divider comprises a pair of prongs mounted on a fixed surface.

Preferably the step of maintaining said tension in the container comprises inserting one end of the elongate object through a side of the container adjacent the shellfish following twisting, to secure the twisted end of the container against untwisting.

Alternatively, the step of maintaining said tension in the container comprises clamping the container closed between said first end and said shellfish compacted towards said second end.

Alternatively the step of maintaining said tension in the container comprises applying a stay to hold the container from untwisting.

Preferably the stay is an elastic band.

Preferably the container is a mesh bag.

Preferably the mesh bag is made of plastic.

Preferably, the step of cooking the shellfish comprises placing the container in a cooker.

Preferably the shellfish are cooked by steaming.

Alternatively, the shellfish may be boiled.

Preferably, the method further comprises the step of drying the shellfish by blow-drying the shellfish within the container by way of heated, unheated or dehydrated air.

Preferably the method further comprises the step of freezing the shellfish.

Preferably, the step of freezing the shellfish comprises freezing the shellfish within the container using a blast freezer. A shellfish processing system (not part of the invention) is also described, said apparatus comprising:
holding means for releasably holding at least one end of a substantially flexible container; and
   tensioning means for moving the holding means to tension said flexible container and compact a plurality of shellfish therein.

Preferably the apparatus further comprises an aperture adapted to receive a first end of said container, wherein the holding means is adapted to releasably hold the first end of the container and the tensioning means adapted to pull said holding means, whereby said aperture engages and compacts said shellfish towards an opposing second end of the container.

Alternatively the tensioning means comprises means for rotating said holding means to tension the container by twisting.

Preferably the apparatus further comprises a divider adapted to receive and constrict a central portion of the container, wherein the holding means is adapted to hold opposite ends of the container and the tensioning means adapted to rotate the opposing ends in opposite directions.

Preferably the divider comprises a pair of prongs mounted on a fixed surface.

Preferably the means for tensioning said flexible container comprises one or more of an electric motor, lever, winch, screw, and/or linear actuator.

Preferably the apparatus further comprises means for securing said flexible container to maintain said tension when said holding means is released.

In a third aspect, the invention may broadly be said to consist in a shellfish processed according to the method of the first aspect of the invention.

Further aspects of the invention, which should be considered in all its novel aspects, will become apparent from the following description.

### Drawing Description

An embodiment of the invention will now be described by way of example with reference to the drawings in which:
- Figure 1: is a diagram of a first embodiment of a mesh bag which may be used to carry out the methods according to the invention;
- Figure 2: is a diagram the mesh bag of Figure 1 with shellfish inserted into the bag and the open ends of the bag both closed;
- Figure 3: is a diagram of the mesh bag of Figure 2 illustrating the step of twisting one end of the bag in accordance with a first embodiment of the inventive method;
- Figure 4: is a diagram of the mesh bag of Figure 3, secured in the twisted position in a subsequent step of the first embodiment of the inventive method;
- Figure 5: is a diagram of a mesh bag, being tensioned through an aperture according to a second embodiment of the inventive method;
- Figure 6: is a diagram of the mesh bag of Figure 2 illustrating the step of dividing the plurality of shellfish in accordance with a third embodiment of the inventive method;
- Figure 7: is the mesh bag of Figure 6 illustrating the step of placing a central portion of the mesh bag onto a divider in accordance with a subsequent step of the third embodiment of the inventive method;
- Figure 8: is a diagram of the mesh bag of Figure 7 illustrating the step of twisting the separated halves of the mesh bag about the divider in opposing directions in accordance with a subsequent step of the third embodiment of the inventive method;
- Figure 9: is a diagram of the mesh bag of Figure 8 illustrating the mesh bag in a compacted state following the twisting step, wherein each half of the bag engages and braces the other half to maintain the tension in the bag; and
- Figure 10: is the mesh bag of Figure 8 illustrating an alternative means for maintaining the tension in the mesh bag using a stay.

### Detailed Description of the Drawings

The present invention comprises a method of bivalve shellfish processing comprising the use of a fluid- or liquid-permeable flexible bag which is tensioned to compress live shellfish contained therein, thereby substantially preventing the shellfish opening, in particular during cooking.

The method is intended primarily for the processing of cockles (often referred to generally as clams), but can also be applied in processing various other bivalve molluscs including, but not limited to, mussels, oysters, scallops, and other varieties of clams.

Throughout the description like reference numerals will be used to refer to like features in different embodiments.

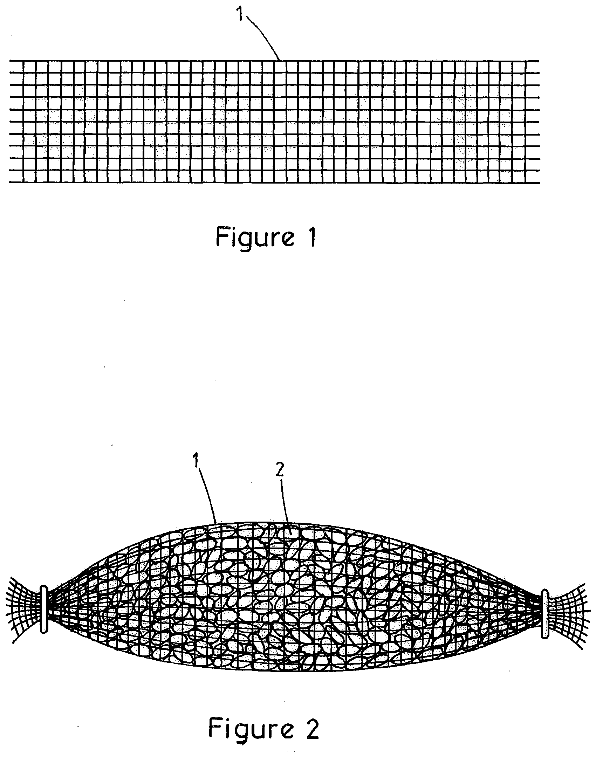

Referring first to Figure 1, there is illustrated a tubular or sleeve-like length of mesh material of the type commonly used to form Leno, raschel, extruded net bags, or similar. The length of the material may be used to form a substantially flexible container in the form of a mesh bag (1) as shown in Figures 2-4. The bag (1) is substantially flexible, allowing the bag (1) to conform to the shape of inserted articles. The bag is also preferably porous or liquid-permeable, to allow for efficient cooking by either steaming or boiling, for example, and subsequent drying. That is, cooking liquid and/or gases easily pass through the bag to the shellfish, thereby facilitating even cooking of all shellfish within the bag.

The bag is preferably made of a plastic such as polyethylene or polypropylene. These materials are particularly advantageous as they are relatively strong, lightweight, flexible, and low in cost. However, other materials such as canvas, rope, or wire could alternatively be used without departing from the scope of the invention.

The mesh material may be provided in a single continuous tubular roll, which can be cut to a required length commensurate with the volume of shellfish to be contained. Alternatively the mesh material may be supplied in one or more predefined lengths, potentially having one end already closed to form a bag.

Referring to Figure 2, there is illustrated the mesh bag (1) with live shellfish (2) inserted into the bag (1). Preferably, the bag (1) illustrated in Figure 1 is first closed at one end, the live shellfish inserted through an opposing open end, and the open end then closed to loosely retain the shellfish (2) within the bag (1). Alternatively, the bag (1) may initially be closed at one end, shellfish inserted through an opposing end, and the open end closed by twisting as described in further detail below. Other variations in these steps, such as closing both ends by twisting, are also possible without departing from the scope of the invention.

The bag (1) may be closed by clamping, applying an adhesive tape, tying a loose or open end of the bag in a knot, tying a length of string about the bag, pulling a drawstring, or by any other suitable method. However, the closing method or means preferably gathers or draws together the sides of the bag to avoid "corners" in the bag after twisting.

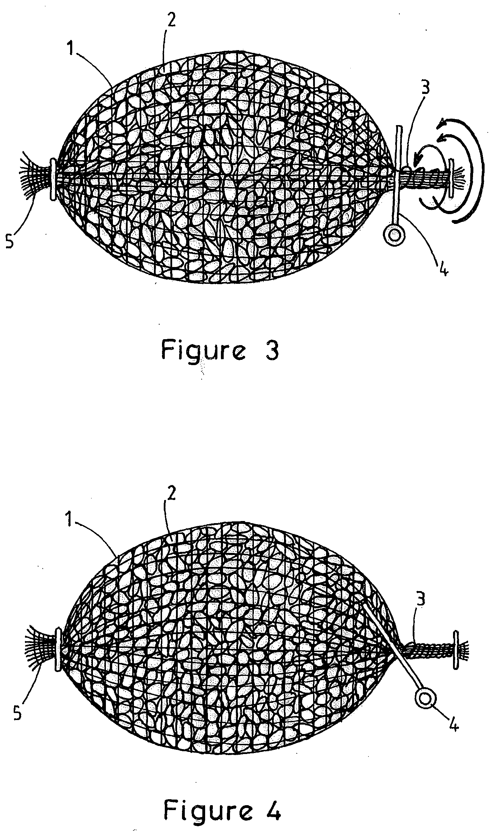

Referring to Figure 3, there is illustrated the mesh bag (1) containing the shellfish (2) and having one end (3) of the bag twisted as illustrated by the arrows. The direction of the twisting could be clockwise or anticlockwise, but is preferably about the longitudinal axis of the bag (1) passing through the two opposing ends. During the twisting operation, the bag (1) tightens about the shellfish as more material becomes a part of the twisted end, taking up any slack in the bag enclosing the shellfish and reducing the internal volume of the bag. This increases the tension over the entire bag, compacting the shellfish together. An opposite end (5) of the bag (1) is preferably used as the stable base to which the bottom of the packed shellfish (2) is compressed against, and is therefore held against the twisting. Alternatively, opposing ends of the bag may be simultaneously twisted in opposing directions.

As the shellfish have an irregular shape the mesh material should be sufficiently flexible in order for the bag to tightly conform over the outer surface of the shellfish placed therein. The fibres of the material should also have sufficient tensile strength in order to sufficiently compress the shellfish following the twisting operation to prevent the shellfish from opening during cooking.

An elongate rigid object (4) is preferably used to assist the twisting operation. The object (4) is inserted through gaps in the mesh on opposing sides of the bag (1) at or adjacent one end of the bag, and then rotated substantially about the longitudinal axis of the bag.

Referring to Figure 4, there is illustrated the mesh bag (1) containing the shellfish (2) and having one end (3) twisted. The shellfish (2) are in a tightly packed or compacted configuration.

Following the twisting operation as illustrated in Figure 3, an end of the elongate rigid object is inserted through another opening in the bag (1) substantially adjacent the shellfish, thereby securing the twisted end of the bag against its tendency to untwist, and maintaining the container to compact the shellfish.

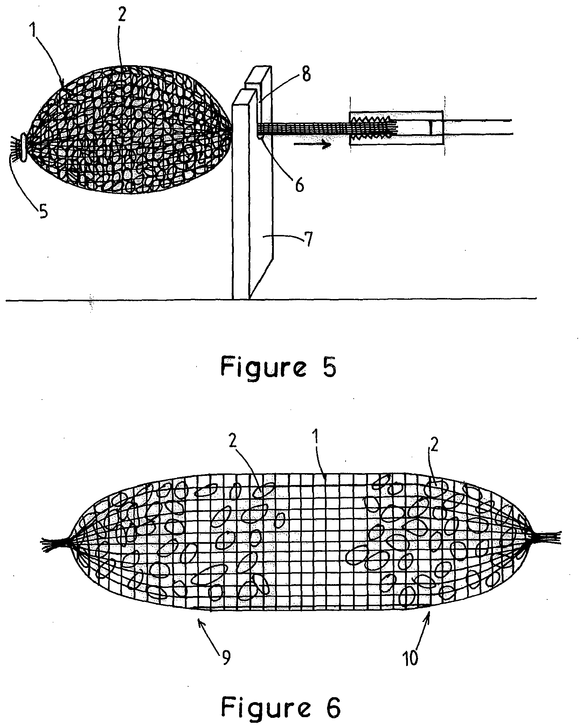

An alternative (not part of the invention) to the method described above is illustrated in Figure 5. As shown, the flexible container may alternatively be tensioned not by twisting the bag, but by pulling a first end of the bag (1) through an aperture, such as a fixed or stationary aperture (6) in a rigid plate (7), in the direction indicated by the arrow (i.e. towards the first end of the bag). This has the effect of both tensioning at least the longitudinal fibres of the mesh bag and compacting the shellfish (2) towards the opposite end of the bag (1).

The opening in the bag (1) need not necessarily be closed prior to insertion of the bag in the aperture (6), but in this case it would normally be the open end of the bag inserted in the aperture. However, as the aperture is sized not to permit any shellfish to pass therethrough so that the plate abuts the shellfish and compacts them towards the second end, the aperture has the temporary effect of closing the open end of the bag whilst in remains in the aperture.

Once tensioned, the shellfish may be retained in their compacted relationship by clamping or otherwise closing the container by drawing the sides of the container together at or substantially adjacent the aperture, between the shellfish and the first end of the bag. The container may be thus closed by any suitable means as previously described.

According to this alternative, the first end of the bag (1) may be axially threaded through the aperture (6), or may alternatively be inserted orthogonally into the aperture by way of a slot (8) extending from the aperture to an outer edge of the plate (6).

Referring to Figure 6, an alternative method of twisting the bag (1) and maintaining the tension in the bag (1) is shown. In this alternative method, the shellfish (2) are is divided between two halves (9, 10) of the bag,

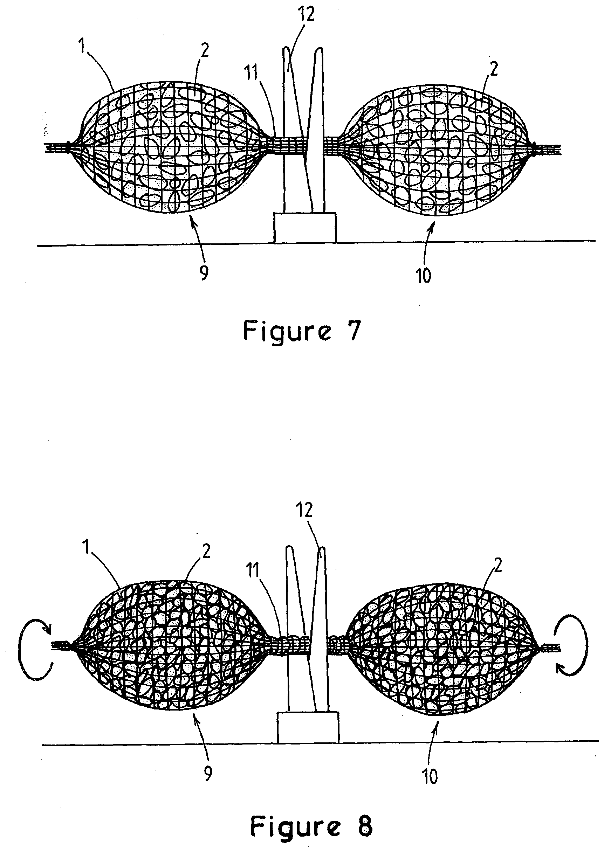

Referring to Figure 7, a central portion (11) between the divided halves (9, 10) is placed in a divider (12) to maintain the separation of the shellfish by constricting the bag in that area. The central portion (11) in the bag contains no shellfish, and it can be seen how the division into two halves (9, 10) in the bag (1) begins to compress the shellfish (2).

Referring to Figure 8, the halves (9,10) are then twisted in opposing directions, tensioning the bag (1) and further compacting the halves (9, 10) containing the shellfish (2). The twisting can be carried out manually or using a machine, and can be performed to provide a specific amount of pressure onto the shellfish (2). The pressure should be enough to maintain the shellfish (2) in their closed and compacted state, but not too much as to cause shell breakage.

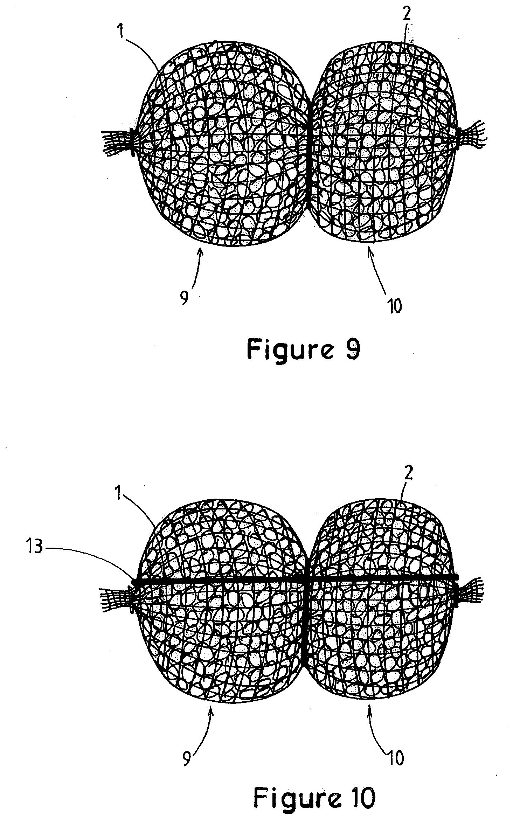

Referring to Figure 9, there is shown the result of the alternative method of twisting the bag (1), where the halves (9, 10) of the bag (1) containing the shellfish (2) are compacted. In this preferable state, each bulging half (9, 10) engages with and braces with the other half (9, 10) adjacent the central portion to maintain this compacted state, and the bag (1) is ready for cooking.

Referring to Figure 10, an alternative for maintaining tension in the halves (9, 10) of the bag (1) is shown, wherein a stay (13) is placed around the entirety of the bag (1) to stop the bag from unwinding.

The stay is preferably an elastic rubber band; however any suitable elastic loop or stay can be used to maintain the tension in the bag. The stay can be used to provide further longitudinal pressure to compact the entirety of the bag, as well as resist the untwisting of each half of the bag during cooking.

The divider is preferably a pair of prongs mounted to a fixed surface; however any permanent or removable dividing apparatus can be used to maintain the separate halves within the bag. The divider should be of sufficient width to accommodate the empty central portion of the mesh bag, in both an untwisted and twisted state. The divider should also have a width limited to stop shellfish passing between each half of the bag.

In a variation (not part of the invention) of the method described above, the flexible container may alternatively, or additionally, be tensioned not by twisting the bag or pulling one end through an aperture, but by displacing (i.e. pulling apart) the opposing ends of the bag. This has the effect of lengthening the containing area of the bag somewhat, but significantly reducing its width (with respect to the direction of displacement) and therefore volume, thereby compressing the shellfish contained therein. The bag may be maintained in the tensioned state by rigidly securing the opposing ends of the bag in the displaced relationship by way of rigidly-displaced clamps, clips, or any other suitable means for holding apart the ends of the bag.

The above methods provide for an economical preparation of the shellfish so that the shellfish are tightly packed and unable to open during cooking and subsequent processes which may include drying, blast freezing, and other food preparation processes. Throughout all of these processes, the shellfish will remain closed and hence retain the meat and fluid within.

Preferably the prepared bag of shellfish is placed within a cooker, where the shellfish are cooked using steam or hot water. Once cooking is completed, the shellfish are drained and dried, preferably by means of heated, unheated or dehydrated air blown through the closed and twisted bag. The container or bag is thus most preferably highly porous and free-draining. The drying is performed in order to remove moisture from the outer surface of the shellfish, as moisture can penetrate the porous surface of the shellfish. This moisture can cause cracking of the shells upon freezing, resulting in an aesthetically inferior product. The cracking can also allow "freezer burn" of the shellfish meat, leading to an inconsistent product.

The step of freezing the shellfish preferably comprises placing the bag in a blast freezer to rapidly freeze the whole shellfish for safe storage.

The flexible bag can be opened and the processed shellfish repackaged for distribution and/or sale, or the shellfish can be distributed or sold packaged in the flexible processing bag of the invention. If the shellfish are repackaged, the flexible processing bag can be emptied and reused, recycled, or disposed of.

The twisting or pulling of the bag is also a simple, safe process that can be carried out using equipment that is inexpensive and relatively simple. The final product of the method of preparation, a tightly packed bag of shellfish, is easily transported and manoeuvred, making the application of processing such as cooking efficient and effective. A shellfish processing apparatus (not part of the invention) adapted to tension the flexible container according to any one or more of the methods described above, is also described. The apparatus at a minimum preferably comprises means for holding opposing ends of the container, and means for tensioning said flexible container.

The holding means may comprise a clamp, clip, or vice, or any other means for securely holding an end of the container.

The means for tensioning the container may comprise an electric motor adapted to rotate said holding means, thereby twisting the container as described above. Alternatively, or additionally, the tensioning means may comprise means for pulling one end or displacing the opposing ends of the container, such as a lever, winch, screw, or a linear actuator such as a hydraulic or pneumatic cylinder, for example. The means for tensioning the flexible container may further comprise an aperture (6) in a fixed plate (7) adapted to receive an end of the container and abut or brace the shellfish against tension applied to that end of the container by displacing it coaxially from the aperture.

In another aspect, the apparatus may be adapted to hold both ends of the bag, divide the shellfish into two halves in the bag using a divider (as described above), and twisting the two halves of the bag in opposite directions.

Preferably the apparatus further comprises means for securing said flexible container to maintain said tension when the holding means is released. This may comprise, for example, means for inserting the rigid elongate object previously described, inserted through holes in the container to secure the container against untwisting, or may comprise means for applying an adhesive tape, string, or a pair of rigidly-displaced clamps, clips, or other means for maintaining the displacement of the ends of the container to maintain said tension. However, any such suitable securing means may alternatively be used without departing from the scope of the invention.

From the foregoing it will be seen that a shellfish preparation method and apparatus is provided which is economical, easy to implement, and effective in producing good quality processed shellfish.

The method is economical in that it makes use of netting bags which are widely available and commonly used in other fields such as the distribution and sale of fruit and/or vegetables. The method is flexible in that a broad range of flexible liquid-permeable containers may be used, depending on material availability and/or cost. The method may be performed manually, or automated for performance by a machine for higher throughput and/or lower ongoing costs.

The use of a mesh bag is more effective than the rigid containers and/or weighted plates of the prior art, as the bag conforms to the shape of the shellfish holding each in a tightly packed, compacted configuration. The configuration and number of shellfish is not dependent on the shape of the container used, unlike in the prior art. The size of the bag used can differ depending on the type and number of shellfish to be processed or, if a consistent bag size is to be used, a smaller load of shellfish can nevertheless be effectively processed, as the closure and twisting point can be adjusted to suit.

Unless the context clearly requires otherwise, throughout the description, the words "comprise", "comprising", and the like, are to be construed in an inclusive sense as opposed to an exclusive or exhaustive sense, that is to say, in the sense of "including, but not limited to".

Any discussion of the prior art throughout the specification should in no way be considered as an admission that such prior art is widely known or forms part of common general knowledge in the field.

## Claims

1. A method for processing shellfish comprising:
providing a substantially flexible liquid-permeable container having at least one open end;
providing a plurality of shellfish in the container;
closing the or each open end of the container;
tensioning the container by twisting the container to compact the shellfish and prevent the shellfish from opening;
securing the twisted end of the container to maintain said tension in the container; and
cooking the shellfish by steaming or boiling the shellfish in the container, wherein the container prevents the shellfish from opening during cooking and allows the cooking liquid and/or gases to the shellfish.

2. The method as claimed in claim 1, wherein the step of twisting the container further comprises inserting a substantially rigid elongate object through substantially opposing sides of the container at or adjacent an end of the container, in order to provide leverage to assist in the twisting.

3. The method as claimed in claim 1, wherein the step of tensioning the container comprises dividing the plurality of shellfish between two halves of the container, and twisting each half of the container in opposing directions.

4. The method as claimed in claim 3, wherein the shellfish are divided during the twisting step using a divider placed about a central portion of the container.

5. The method as claimed in claim 2 wherein the step of maintaining said tension in the container comprises inserting one end of the elongate object through a side of the container adjacent the shellfish following twisting, to secure the twisted end of the container against untwisting.

6. The method as claimed in any one of claims 1 to 4, wherein the step of maintaining said tension in the container comprises clamping the container closed between said open end and said shellfish compacted towards an opposing end.

7. The method as claimed in claim 3 or claim 4, wherein the step of maintaining said tension in the container comprises applying a stay to hold the container from untwisting.

8. The method as claimed in any one of claims 1 to 7, wherein the container comprises a plastic mesh bag.

9. The method as claimed in any one of claims 1 to 8, wherein the method further comprises a step of drying the shellfish by blow-drying the shellfish within the container by way of heated, unheated or dehydrated air.

10. The method as claimed in any one of claims 1 to 9, wherein the method further comprises a step of freezing the shellfish.

11. The method as claimed in claim 10, wherein the step of freezing the shellfish comprises freezing the shellfish within the container using a blast freezer.

12. The method as claimed in any one of claims 1 to 11, wherein the tension applies a pressure sufficient to prevent the shellfish opening during cooking without causing shell breakage.

## Patentansprüche

1. Zubereitungsverfahren für Schalentiere, umfassend:
- Bereitstellen eines im Wesentlichen flexiblen, flüssigkeitsdurchlässigen Behälters mit mindestens einem offenen Ende;
- Bereitstellen einer Mehrzahl an Schalentieren in dem Behälter;
- Schließen des oder jedes offenen Endes des Behälters;
- Spannen des Behälters durch Verdrillen des Behälters, um die Schalentiere zusammen zu drücken und um ein Öffnen der Schalentiere zu verhindern;
- Sichern des verdrillten Endes des Behälters, um die Spannung des Behälters aufrechtzuerhalten; und
- Garen der Schalentiere indem die Schalentiere in dem Behälter gedämpft oder gekocht werden, wobei der Behälter die Schalentiere am Öffnen während des Garens hindert und die Garflüssigkeit und/oder -gase zu den Schalentieren gelangen lässt.

2. Zubereitungsverfahren nach Anspruch 1, wobei der Schritt des Verdrillens des Behälters ferner ein Einführen eines im Wesentlichen starren, langgestreckten Körpers durch im Wesentlichen entgegengesetzte Seiten des Behälters an oder benachbart zu einem Ende des Behälters umfasst, um einen Hebel zum Unterstützen des Verdrillens bereitzustellen.

3. Zubereitungsverfahren nach Anspruch 1, wobei der Schritt des Spannens des Behälters ein Unterteilen der Mehrzahl an Schalentiere zwischen zwei Hälften des Behälters und ein Verdrillen jeder Hälfte des Behälters in entgegengesetzte Richtungen umfasst.

4. Zubereitungsverfahren nach Anspruch 3, wobei die Schalentiere während des Verdrillschritts unterteilt werden, wobei ein Teiler verwendet wird, der in etwa in einer mittigen Position des Behälters platziert wird.

5. Zubereitungsverfahren nach Anspruch 2, wobei der Schritt des Aufrechterhaltens der Spannung des Behälters ein Einführen eines Endes des langgestreckten Körpers durch eine Seite des Behälters benachbart zu den Schalentieren nach dem Verdrillen umfasst, um das verdrillte Ende des Behälters vor einem Entdrillen zu sichern.

6. Zubereitungsverfahren nach einem der Ansprüche 1-4, wobei der Schritt des Aufrechterhaltens der Spannung des Behälters ein Einklemmen des Behälters zwischen dem offenen Ende und den Schalentieren, die hin zu einem entgegengesetzten Ende zusammengedrückt werden, umfasst.

7. Zubereitungsverfahren nach Anspruch 3 oder Anspruch 4, wobei der Schritt des Aufrechterhaltens der Spannung des Behälters ein Anwenden eines Ankers umfasst, um den Behälter vom Entdrillen abzuhalten.

8. Zubereitungsverfahren nach einem der Ansprüche 1-7, wobei der Behälter einen Kunststoffmaschensack umfasst.

9. Zubereitungsverfahren nach einem der Ansprüche 1-8, wobei das Zubereitungsverfahren ferner den Schritt umfasst Trocknen der Schalentiere durch Trockenblasen der Schalentiere innerhalb des Behälters durch aufgewärmte, unaufgewärmte oder getrocknete Luft.

10. Zubereitungsverfahren nach einem der Ansprüche 1-9, wobei das Zubereitungsverfahren ferner den Schritt umfasst Gefrieren der Schaltentiere.

11. Zubereitungsverfahren nach Anspruch 10, wobei der Schritt des Gefrierens der Schalentiere ein Gefrieren der Schalentiere innerhalb des Behälters durch Verwenden eines Luftgefrierers umfasst.

12. Zubereitungsverfahren nach einem der Ansprüche 1-11, wobei die Spannung einen Druck ausübt, der ausreicht, um die Schalentiere während des Garens am Öffnen zu hindern ohne ein Schalenbruch zu verursachen.

## Revendications

1. Procédé de traitement de coquillages comprenant :
la fourniture d'un contenant sensiblement flexible perméable aux liquides ayant au moins une extrémité ouverte ;
la fourniture d'une pluralité de coquillages dans le contenant ;
la fermeture de la ou de chaque extrémité ouverte du contenant ;
la mise sous tension du contenant par torsion du contenant pour tasser les coquillages et empêcher les coquillages de s'ouvrir ;
le fait d'attacher l'extrémité torsadée du contenant pour maintenir ladite tension dans le contenant ; et
la cuisson des coquillages par étuvage ou ébouillantage des coquillages dans le contenant, dans lequel le contenant empêche les coquillages de s'ouvrir lors de la cuisson et permet le passage du liquide et/ou des gaz de cuisson dans les coquillages.

2. Procédé selon la revendication 1, dans lequel l'étape de torsion du contenant comprend en outre l'insertion d'un objet allongé sensiblement rigide à travers des côtés sensiblement opposés du contenant au niveau ou à proximité d'une extrémité du contenant, afin de fournir un levier pour faciliter la torsion.

3. Procédé selon la revendication 1, dans lequel l'étape de mise sous tension du contenant comprend la répartition de la pluralité de coquillages entre deux moitiés du contenant, et la torsion de chaque moitié du contenant dans des directions opposées.

4. Procédé selon la revendication 3, dans lequel les coquillages sont répartis lors de l'étape de torsion au moyen d'un diviseur placé autour d'une partie centrale du contenant.

5. Procédé selon la revendication 2, dans lequel l'étape de maintien de ladite tension dans le contenant comprend l'insertion d'une extrémité de l'objet allongé à travers un côté du contenant à proximité des coquillages après la torsion, pour attacher l'extrémité torsadée du contenant pour ne pas qu'elle se desserre.

6. Procédé selon l'une quelconque des revendications 1 à 4, dans lequel l'étape de maintien de ladite tension dans le contenant comprend le serrage du contenant fermé entre ladite extrémité ouverte et lesdits coquillages tassés vers l'extrémité opposée.

7. Procédé selon la revendication 3 ou la revendication 4, dans lequel l'étape de maintien de ladite tension dans le contenant comprend l'application d'un renfort pour empêcher le contenant de se desserrer.

8. Procédé selon l'une quelconque des revendications 1 à 7, dans lequel le contenant comprend un sac filet en plastique.

9. Procédé selon l'une quelconque des revendications 1 à 8, dans lequel le procédé comprend en outre une étape de séchage des coquillages par séchage par soufflage des coquillages à l'intérieur du contenant à l'aide d'air chauffé, non chauffé ou déshydraté.

10. Procédé selon l'une quelconque des revendications 1 à 9, dans lequel le procédé comprend en outre une étape de congélation des coquillages.

11. Procédé selon la revendication 10, dans lequel l'étape de congélation des coquillages comprend la congélation des coquillages à l'intérieur du contenant au moyen d'un congélateur à air pulsé.

12. Procédé selon l'une quelconque des revendications 1 à 11, dans lequel la tension applique une pression suffisante pour empêcher les coquillages de s'ouvrir lors de la cuisson sans casser les coquilles.
